# EUROPÄISCHE PATENTANMELDUNG

(11) **EP 1 198 097 A2**
(43) Veröffentlichungstag der Anmeldung: **17.04.2002**
(21) Anmeldenummer: 01123633.8
(22) Anmeldetag: 02.10.2001
(51) Int. Cl.: H04L 12/40

(54) **Virtuelles Speichergerät für ein digitales Hausnetz**

(30) Priorität: 06.10.2000 DE 10049498
(71) Anmelder: Philips Corporate Intellectual Property GmbH, 52064 Aachen (DE); Koninklijke Philips Electronics N.V., 5621 BA Eindhoven (NL)
(72) Erfinder: Baumeister, Markus, 52064 Aachen (DE); Hauptmann, Steffen, Dr., 52064 Aachen (DE); Klabunde, Karin, 52064 Aachen (DE)
(74) Vertreter: Volmer, Georg, Dipl.-Ing.

(57) **Zusammenfassung**

Die Erfindung bezieht sich auf ein Netzwerk im Heimbereich mit Netzwerkknoten und einem auf allen Netzwerkknoten verteilten Softwaresystem (17) mit einer für die realen Geräte des Netzwerks einheitlichen, softwaremäßigen als virtuelles Speichergerät (18) bezeichneten Abstraktion zur Verwaltung der Zustände aller Speichergeräte (1, 6, 7, 9) im Netzwerk.

## Beschreibung

Die Erfindung bezieht sich auf ein Netzwerk mit Netzwerkknoten und einem auf allen Netzwerkknoten verteilten Softwaresystem.

Ein solches Netzwerk ist aus Ralf Steinmetz (Hrsg.): "Kommunikation in verteilten Systemen (KiVS)", 11. ITG/GI-Fachtagung, Darmstadt, 2.-5. März 1999; Stephan Abramowski, Heribert Baldus, Tobias Helbig: "Digitale Netze in Wohnungen-Unterhaltungselektronik im Umbruch", Seiten 340 bis 351, bekannt. Es werden in dieser Veröffentlichung Anforderungen für ein zukünftiges Netzwerk im Heimbereich mit der darin verwendeten Software beschrieben. Die neu entstehenden digitalen Haunetze basieren auf der Verknüpfung verschiedenster meist digitaler Geräte und verarbeiten eine Vielzahl von Daten mit verschiedensten Datenformaten. Auf die Verwaltung und Abspeicherung der Daten wird in dieser Veröffentlichung nicht näher eingegangen.

Der Erfindung liegt die Aufgabe zugrunde, ein Netzwerk mit einem Softwaresystem zu schaffen, welches das Abspeichern, Archivieren und Wiederauffinden verschiedenster Daten dem Benutzer auf eine einfache Weise ermöglicht.

Die Aufgabe wird durch ein Netzwerk der eingangs genannten Art dadurch gelöst, dass das Softwaresystem für die realen Geräte des Netzwerks eine einheitliche, soft-waremäßige als virtuelles Speichergerät bezeichnete Abstraktion enthält und dass das virtuelle Speichergerät zur Verwaltung der Zustände aller Speichergeräte im Netzwerk vorgesehen ist.

Eine verallgemeinerte Darstellung der realen Geräte des Netzwerks wird als ein virtuelles Speichergerät bezeichnet. Das virtuelle Speichergerät stellt eine Abstraktion zur Verfügung, die dem Benutzer des Softwaresystems angeboten werden kann. Sie erleichtert ihm das Abspeichern, Archivieren und Wiederauffinden aller Arten von Daten. Durch ein virtuelles Speichergerät ist eine geräteunabhängige Abspeicherung von beliebigen Daten in digitalen Hausnetzen möglich, so dass der Benutzer von der Verwendung vielfältiger, heterogener, realer Speichergeräte abgeschirmt wird. Es verwaltet den Zustand aller Speichergeräte, wie z.B. Erreichbarkeit des realen Gerätes und vorhandener Speicherplatz auf dessen Medien.

Der Benutzer speichert seine Daten ausschließlich auf einem virtuellen Speichergerät, das die Zuordnung der Daten zu einem realen Speichergerät übernimmt. Diese Zuordnung kann auch vom Anwender beeinflusst werden. Der Benutzer des virtuellen Speichergeräts muss nicht die Struktur des Netzwerks, die Art der eingesetzten Speichergeräte und deren augenblicklichen Zustand bezüglich der Verfügbarkeit von freiem Speicherplatz beachten, da diese Parameter vom virtuellen Speichergerät verwaltet werden. Falls die Notwendigkeit entsteht ein Wechselmedium eines Speichergerätes einzulegen, wird der Benutzer durch das virtuelle Speichergerät hierzu angeleitet.

Zum Wiederauffinden der gespeicherten Daten im Netzwerk muss der Benutzer nicht wissen, auf welchem realen Gerät seine Daten zuvor gespeichert wurden. Da das virtuelle Speichergerät den Inhalt aller Speichergeräte inklusive ihrer Wechselmedien verwaltet, kann das virtuelle Speichergerät anhand von Attributen, z.B. dem Titel, die gewünschten Daten in Netzwerk finden. Auch eine erhöhte Zuverlässigkeit ist durch die Wahl entsprechender Attribute beim Abspeichern der Daten möglich, z.B. durch repliziertes Abspeichern auf verschiedenen realen Speichergeräten.

Zur Reservierung von Systemressourcen wie Speichergerät oder Bandbreite im Netzwerk benutzt das virtuelle Speichergerät andere Softwarekomponenten. Entsprechend der Zustände und vorgegebener Attribute zur Charakterisierung des Speicherzugriffs, wie z.B. Redundanz oder gezielte Angabe eines Gerätes, werden Speicherzugriffsanforderungen bearbeitet.

Ein Ausführungsbeispiel der Erfindung wird nachstehend anhand der Figur näher erläutert. Es zeigt:
- Fig. 1: Teil eines Netzwerks mit relevanten Softwarekomponenten ohne ein virtuelles Speichergerät,
- Fig. 2: relevanten Softwarekomponenten mit einem virtuellen Speichergerät und
- Fig. 3: ein Netzwerk mit verschiedenen Speichergeräten, die von einem virtuellen Speichergerät verwaltet werden.

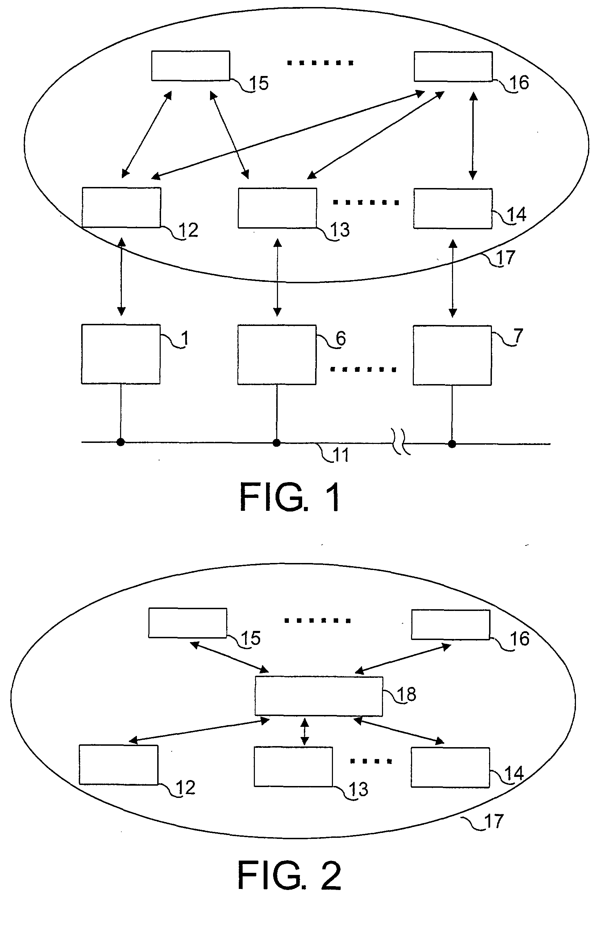

Fig. 1 zeigt einen Teil eines Netzwerks im Heimbereich mit mehreren realen Speichergeräten 1, 6, und 7, die durch ein Bussystem 11 miteinander gekoppelt werden. Innerhalb eines verteilten Softwaresystems 17 befinden sich neben vielen anderen Softwarekomponenten die für die Beschreibung der Erfindung relevanten als Funktionskontrollmodule bezeichneten Softwarekomponenten 12 bis 14. Die Funktionskontrollmodule 12 bis 14 dienen als Schnittstelle zu den realen Speichergeräten 1, 6, 7 und werden als solche von verschiedenen Applikationen 15 und 16 genutzt. Jede Applikation 15 und 16 muss innerhalb des Softwaresystems 17 mit jedem Funktionskontrollmodul 12 bis 14 kommunizieren und arbeiten. Dadurch entsteht ein deutliches Problem: Je größer die Anzahl der Speichergeräte 1, 6 und 7, desto komplizierter wird das Abspeichern, Archivieren und Wiederauffinden von Daten sowohl für die Applikation 15 und 16 als auch für den Benutzer der Applikation 15 und 16.

In Fig. 2 befindet sich innerhalb des verteilten Softwaresystems 17 nicht nur die Funktionskontrollmodule 12 bis 14 und die Applikationen 15 und 16, sondern auch eine als virtuelles Speichergerät 18 bezeichnete Softwarekomponente. Das virtuelle Speichergerät 18 übernimmt die Verwaltung aller Funktionskontrollmodule 12 bis 14 und stellt den Applikationen und ihren Benutzern eine einheitliche, unkomplizierte Speicher-schnittstelle zur Verfügung.

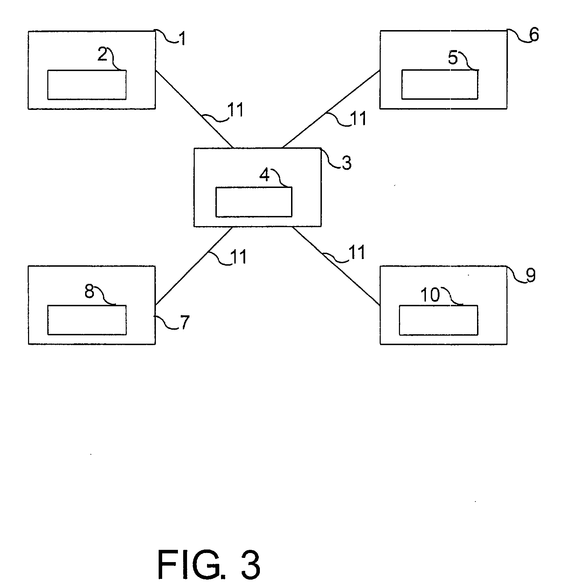

Einen Ausschnitt aus einem Netzwerk, welches beispielhaft einige Speichergeräte 1, 6, 7 und 9 enthält, zeigt Fig. 3. Die im Bild dargestellten Speichergeräte sind ein Geräte 1 zum Zugriff auf ein Internet mit einer virtuellen Platte 2, eine Set-Top-Box (STB) 3 mit einer Festplatte 4, eine Speicherbox 6 mit einer Festplatte 5, ein DVD-Recorder 7 mit einem DVD-Laufwerk 8 und ein Mini-Disk-Recorder 9 mit einigen Minidisks 10. Ein vollständiges Netzwerk würde weitere Geräte beinhalten, wie z.B. Displays (Fernseher), Tuner, Verstärker, CD-Player, CD-Lese-/Schreibgeräte und vieles mehr.

Das virtuelle Speichergerät erfordert das Bussystem 11 (z.B. IEEE 1394), über das alle Geräte angesprochen werden können. Im dargestellten Beispiel sind die realen Geräte sternförmig miteinander verbunden. Die Topologie des Bussystems kann dabei alle bekannten Formen annehmen.

Das virtuelle Speichergerät wird durch eine Software realisiert, die auf einem der im Netzwerk enthaltenen Geräte abläuft und ein Bestandteil der in Fig. 1 und 2 dargestellten Softwarearchitektur für digitale Hausnetzwerke ist. Diese geräteunabhängige Software spricht die anderen Geräte über die als Funktionskontrollmodul bekannten und Idealerweise standardisierten Schnittstellen an.

Im folgenden werden einige Beispielszenarien beschrieben, die die Funktionalität des virtuellen Speichergerätes verdeutlichen.

Ein Benutzer des Hausnetzwerks beschließt, eine Sendung aufzuzeichnen, die er sich gerade im Fernsehen anschaut. Er zeichnet sie auf das virtuelle Speichergerät auf. Dieses wiederum wählt ein existierendes Speichergerät, z.B. die Festplatte 4 in der STB 3 als Speichermedium aus, um die Sendung aufzunehmen. Es ist a-priori unbekannt, wie lang die Aufnahme wird. Daher kann die benötigte Menge Speicherplatz der Festplatte 4 nicht vorab ermittelt werden. Tatsächlich lässt der Benutzer die Aufzeichnung sehr lange mitlaufen und die Kapazität der Festplatte 4 in der STB 3 reicht nicht aus. Da die Aufzeichnung auf das virtuelle Speichergerät erfolgt, wird diese Tatsache von dem Benutzer nicht wahrgenommen. Das virtuelle Speichergerät setzt die Aufzeichnung automatisch auf einem anderen verfügbaren Gerät, wie z.B. der Speicherbox 6 mit der Festplatte 5 als Speichermedium, fort.

Das Szenario verdeutlicht, dass durch den Benutzer kein Pfadname angeben werden muss, auf welches der verschiedenen realen Speichergerät der Mitschnitt aufzeichnet werden soll. Desweiteren muss er sich auch keine Gedanken über die Länge des Mitschnittes und über die auf den verschiedenen Geräten noch verfügbare Speicherkapazität machen. Wird zu einem späteren Zeitpunkt auf die Aufzeichnung zugegriffen, dann müssen Name, Datum oder anderer Attribute durch den Benutzer dem virtuellen Speichergerät angegeben werden. Der Aufzeichnungsort bzw. Pfadname oder gar eine evtl. Stückelung der Aufzeichnung muss dem Benutzer nicht bekannt sein, um die Aufzeichnung vom virtuellen Speichergerät abzurufen. Die Daten könnten sogar zwischenzeitlich durch das virtuelle Speichergerät aus Optimierungsgründen innerhalb des Hausnetzwerks verschoben worden sein.

Im zweiten Beispielszenario wird das Wiederauffinden eines abgespeicherten Videofilms beschrieben. Der Benutzer möchte sich einen vor längerer Zeit aufgezeichneten Videofilm anschauen. Er kann sich noch ungefähr an den Titel des Videos erinnern. Das virtuelle Speichergerät erstellt ihm eine Liste mit Titeln von Aufzeichnungen, die dem vom Benutzer vorgegebenen Titel entsprechen könnten. Der gesuchte Titel wird vom Benutzer erkannt und zum Abspielen ausgewählt. Das virtuelle Speichergerät fordert ihn jetzt auf, die DVD mit der angegebenen Nummer in das DVD-Laufwerk 8 des DVD-Recorders 7 einzulegen. Daraufhin wird der Videofilm abgespielt.

In diesem Beispiel wird deutlich, dass das virtuelle Speichergerät den Inhalt aller Speichergeräte inklusive ihrer Wechselmedien verwaltet. Eine Aufnahme kann über die Angabe von Attributen (z.B. den Titel) gefunden werden. Der Benutzer muss nicht wissen, an welchem realen Speichergerät und Medium des Hausnetzwerks die Aufnahme abgespeichert wurde.

Das dritte Beispielszenario schildert das Anlegen einer großen Musik-Bibliothek im Hausnetzwerk. Der Benutzer hört in seiner Freizeit gern klassische Musik. Viele Mitschnitte bei verschiedenen Klassiksendern werden von ihm aufgezeichnet, um sich eine möglichst umfangreiche Sammlung von Stücken seiner Lieblingskomponisten zuzulegen. Alle Stücke werden durch den Benutzer auf das virtuelle Speichergerät aufgezeichnet. Beim Abspielen die Stücke stellt er fest, dass seine (häufiger gehörten) Lieblingsstücke immer sofort abgespielt werden, während das Abspielen selten gehörter Stücke anfangs mit einer kleinen Verzögerung verbunden ist. In Anbetracht des riesigen Umfangs seiner Sammlung kann er das aber akzeptieren.

Bei diesem Szenario wird deutlich, dass das virtuelle Speichergerät die vorhandenen Speichermedien entsprechend ihrer Eigenschaften nutzt. Häufig zugegriffene Aufnahmen werden auf der schnellen Speicherbox abgelegt. Da deren Kapazität aber begrenzt ist, werden selten genutzte Audio-Titel auf die im Internet bereitstehende virtuelle Platte 2 ausgelagert. Die virtuelle Platte 2 des Internets hat eine sehr große Kapazität, dafür ist die Bandbreite für den Zugriff aber deutlich geringer als im Hausnetzwerk des Benutzers. Die geringere Bandbreite führt zu kleinen Verzögerungen beim Abspielen der Titel (wahlweise alternativ auch zu einer geringeren Qualität).

Das vierte Beispielszenario beschreibt die Funktion des virtuellen Speichergerätes bei Verwendung einiger vom virtuellen Speichergerät zur Verfügung gestellter Attribute. Der Benutzer möchte einem Kollegen einige Musikstücke auf einer Minidisk 10 übergeben. Er dupliziert diese Musikstücke, wobei er diesmal dem virtuellen Speichergerät explizit vorgibt, das Duplikat auf einer Minidisk abzuspeichern. Der Benutzer muss dabei zusätzlich angeben, ob die beiden soeben bespielten Minidisks 10 weiter zum Bestandteilen des Hausnetzwerkes gehören werden. Da der Benutzer die Minidisks 10 seinem Kollegen schenken möchte, gibt er an, dass die Minidisks 10 nicht mehr Bestandteile des Hausnetzwerks sind. Das virtuelle Speichergerät fordert ihn auf, zuerst eine und später eine zweite Minidisk 10 in den Mini-Disk-Rekorder 9 einzulegen.

Das Szenario zeigt, dass physische Speichergeräte oder bestimmte Typen von Speichergeräten (hier Minidisk) explizit über das virtuelle Speichergerät angesprochen werden können. Werden dabei Wechselspeicher beschrieben, wird festgestellt, ob diese unter der Verwaltung des virtuellen Speichergerätes verbleiben sollen.

Das fünfte Beispielszenario erläutert die wichtige Funktion der bei der Abspeicherung anzugebenen Attribute. Eine Vielzahl an alten Familienfotos wurde von dem Benutzer in sein Hausnetzwerk eingescannt. Das sind für ihn sehr wichtige Erinnerungen. Als sie über das virtuelle Speichergerät abspeichert werden, gibt der Benutzer an, dass er eine Abspeicherung mit erhöhter Zuverlässigkeit wünscht. Das soll ihn gegen Schäden an einem der Speichermedien schützen. Die Familienfotos sind für den Benutzer von besonderer Wichtigkeit, deshalb sollten diese Daten unter keinen Umständen beschädigt werden oder abhanden kommen. Erhöhte Zuverlässigkeit ist ein beim Abspeichern auf das virtuelle Speichergerät auswählbares Attribut. Ohne weitere Angaben des Benutzers fertigt das virtuelle Speichergerät zwei Kopien auf unabhängigen Speichergeräten bzw. Speichermedien an. Sollte sich später herausstellen, dass eine Kopie beschädigt ist, dann wird automatisch die andere verwendet und die beschädigte neu angelegt. Der Benutzer würde nicht mit dem Schaden konfrontiert werden.

## Patentansprüche

1. Netzwerk mit Netzwerkknoten und einem auf allen Netzwerkknoten verteilten Softwaresystem (17) mit einer für die realen Geräte des Netzwerks einheitlichen, softwaremäßigen als virtuelles Speichergerät (18) bezeichneten Abstraktion zur Verwaltung der Zustände aller Speichergeräte (1, 6, 7, 9) im Netzwerk.

2. Netzwerk nach Anspruch 1
**dadurch gekennzeichnet,**
**dass** das virtuelle Speichergerät (18) für die Zuordnung der zu speichernden Daten zu den realen Speichergeräten vorgesehen ist und
**dass** das virtuelle Speichergerät (18) zum Wiederauffinden der gespeicherten Daten im Netzwerk vorgesehen ist.

3. Netzwerk nach Anspruch 2
**dadurch gekennzeichnet,**
**dass** wählbare Attribute beim Abspeichern auf das virtuelle Speichergerät (18) vorgesehen sind.

4. Netzwerk nach Anspruch 3
**dadurch gekennzeichnet,**
**dass** das virtuelle Speichergerät (18) mittels Softwarekomponenten zur Reservierung von Systemressourcen vorgesehen ist.

5. Netzwerk nach Anspruch 4
**dadurch gekennzeichnet,**
**dass** das virtuelle Speichergerät (18) zur Bearbeitung von Speicherzugriffsanforderungen vorgesehen ist.
